# EUROPEAN PATENT SPECIFICATION

(11) **EP 0 576 595 B1**
(45) Date of publication and mention of the grant of the patent: **07.08.2002**
(21) Application number: 92909731.9
(22) Date of filing: 06.03.1992
(51) Int. Cl.: G06F 3/00, H04J 3/04

(54) **TRANSMISSION GATE SERIES MULTIPLEXER**
ÜBERTRAGUNGSMULTIPLEXER MIT EINER REIHENSCHALTUNG VON GATTERN
MULTIPLEXEURS DE TRANSMISSION A PORTE MONTES EN SERIE

(30) Priority: 15.03.1991 US 670075
(43) Date of publication of application: 05.01.1994
(73) Proprietor: TransLogic Technology, Inc., Beaverton, Oregon 97006 (US)
(72) Inventor: Tran, Dzung J., Hillsboro, Oregon 97006 (US)
(74) Representative: Weatherald, Keith Baynes
(86) International application number: PCT/US92/01739
(87) International publication number: WO 92/16888

(56) References cited:
- US-A- 3 100 294
- US-A- 4 593 390
- US-A- 4 926 423
- US-A- 5 012 126
- US-A- 5 040 139
- PATENT ABSTRACTS OF JAPAN vol. 012, no. 351 (E-660), 20 September 1988 & JP 63 107222 A (HITACHI LTD), 12 May 1988,
- IBM Technical Disclosure Bulletin, Vol. 20, No. 7, December 1977, DEBORD et al., "Analoy Multiplexing Device".

## Description

The present invention relates to the field of digital logic circuits and, in particular, relates to improved multiplexer circuits.

Known multiplexer circuits are built up of a binary tree arrangement of "one-of-two" or two-input multiplexer circuits. For N input variables, a first stage (or input stage) comprises N/2 two-input multiplexers, arranged in parallel to receive the input variables. Each stage reduces the number of signals in half, so each stage requires half as many two-input multiplexers as the preceding stage. The final stage (or output stage) selects one of two remaining signals as the output signal.

To illustrate, a known eight-input (or 8:1) multiplexer circuit comprises an input stage having four two-input multiplexer circuits arranged in parallel to receive the input variables and provide four output signals. A second stage comprises two two-input multiplexer circuits arranged in parallel to reduce the four first-stage output signals to two output signals. A final stage two-input multiplexer selects one of the two output signals as the multiplexer output signal.

In the prior art, all of the multiplexers in each stage are controlled by a corresponding binary control signal. Thus, known multiplexers have log₂N stages, and have log₂N control (or select) inputs, for selecting one of the input variable signals. Examples of known multiplexer circuits are shown in the *TC19G000 Macrocell Data Sheet* at pages 1-109 (mux 4 cell) and 1-110 (mux 8 cell) (1986).

JP publication No. 63 10722 discloses the use of transfer gates (TMGs) in a signal selective circuit. The signal selective circuit may also be viewed as a multistage multiplexer circuit in which multiple multiplexers are arranged in parallel in each stage.

One disadvantage of known multiplexers is loading on the control inputs. The control inputs must drive all of the multiplexer circuits in a stage, which may be, for example, eight or 16 muxes in the first stage. This can lead to undue delay in controlling the circuit.

Another limitation inherent in the prior art approach is the use of log₂N control (or select) lines. This requires binary encoding the desired selection. A greater number of select lines could be used to simplify such encoding.

The prior art also includes sequential multiplexer circuits, the outputs of which are a function of past and present input signals. One use of sequential multiplexer circuits is time-division multiplexing, in which input signals are sequentially selected for transmission over a single path connected to the output terminal of the multiplexer circuit. In such multiplexer circuits, memory elements, such as latches or flip-flops, store the several input signals at various locations within the circuit. A clock signal is applied to the memory elements, and control signals are applied to the multiplexers to move the input signals in sequential order through the circuit. On each clock cycle one of the input signals is output by the circuit.

Two examples of time-division multiplexers are shown in US 3 100294 and 4 926 423. In the '294 specification, the time-division multiplexer circuit is comprised of several latching relay circuits that sequentially connect several input terminals to the circuit output terminal. The relay circuits, which are configured as clocked RS flip-flops, use the state of their past and present input signals as control signals that determine which input terminal is connected to the circuit output terminal during each clock cycle. In US 4 926 423 (Fig. 1B), the time-division multiplexer circuit comprises a series of alternating D flip-flops and 2:1 multiplexers. A D flip-flop is coupled between the outlet terminal of a 2:1 multiplexer and one of the inlet terminals of a succeeding 2:1 multiplexer, with an input signal connected directly to the other inlet terminal. The 2:1 multiplexers are controlled to select sequentially the input signals at the rate of one per clock cycle.

Because of their sequential nature, time-division and other sequential multiplexer circuits are not suitable as combinational multiplexers, wherein each input signal must be immediately and randomly selectable. First, they do not permit the random selection of input signals: instead, the input signals are selected based on a predetermined application of signals to the multiplexer select lines. Second, they do not permit the immediate selection of more than one present input signal. Most input signals move through the multiplexer circuit for several clock cycles before arriving at the circuit outlet terminal, making them past signals by the time they are transmitted.

An object of the present invention is to select one of a plurality of input variable signals as an output signal, i.e. to provide a multiplexer function, while minimizing loading on select signal lines.

Accordingly the present invention provides multiplexer circuits that are as claimed in the appended claims.

These new "serial multiplexer" circuits limit loading on each control signal input to but a single load. The new multiplexers also provide for a greater number of control inputs, namely N-1 control inputs as compared to log₂N control inputs in the prior art.

The present invention will now be described, by way of example, with reference to the accompanying drawings, in which:
FIG. 1 is a schematic diagram of a known two-input multiplexer circuit;
FIG. 2 is a schematic diagram of a 4:1 multiplexer circuit according to the present invention;
FIG. 3 is a schematic diagram of a 5:1 multiplexer circuit according to the present invention, and
FIG. 4 is a schematic diagram of a 6:1 multiplexer circuit according to the present invention.

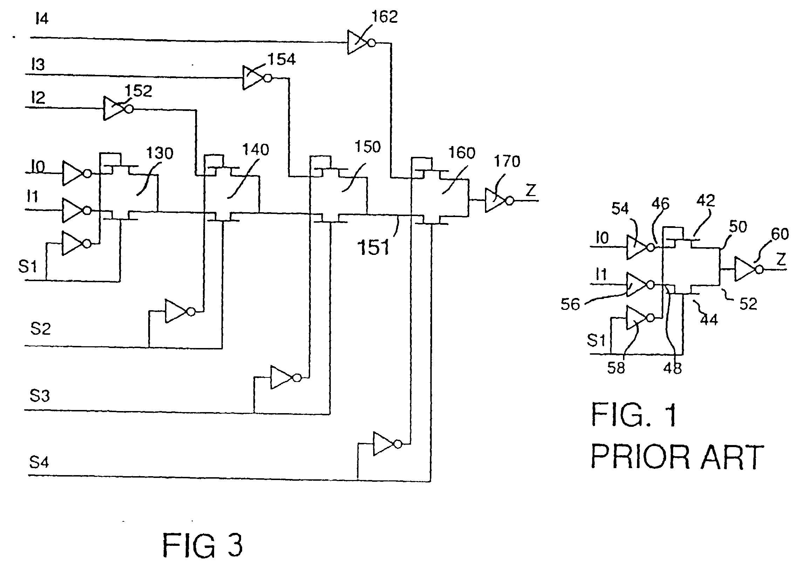

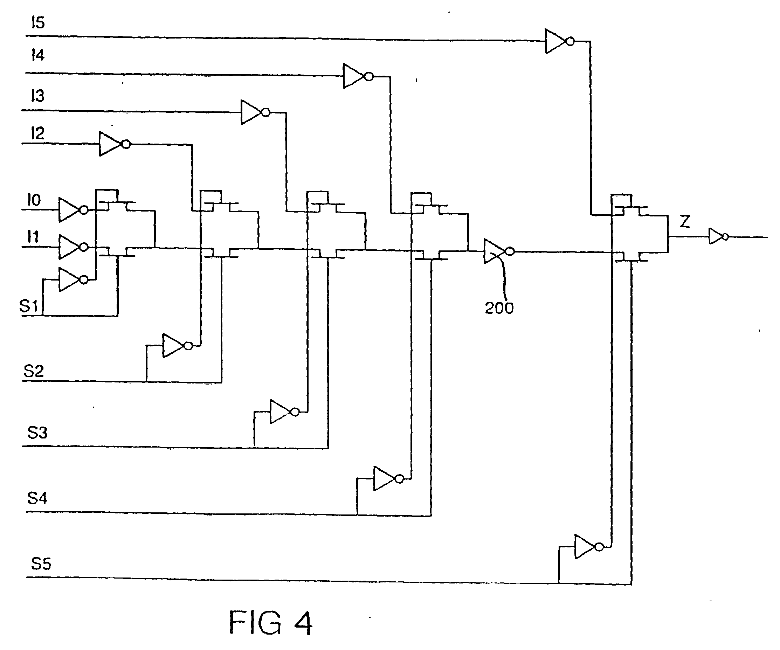

FIG. 1 is a schematic diagram of a known 2:1 multiplexer circuit. The circuit is designated "M2" as an abbreviation for a two-input multiplexer. The M2 circuit includes a pair of transmission gates 42, 44. The transmission gates are drawn as simple pass transistors for clarity, here as well as in FIGS. 3-5. In practice, each transmission gate comprises a complementary pair of transistors, as is known.

Transmission gates 42, 44 have input terminals coupled through inverters 54, 56 to receive input variables I₀, I₁ respectively. The transmission gates are controlled by a control signal S₁. The outputs 50, 52 from the transmission gates are connected together to form a single outlet terminal. The output signal is coupled through an inverter 60 to provide output signal Z. Inverter 60 provides positive logic, and buffers the output signal. In operation, the state of control input S₁ selects one of input variables I₀, I₁ for output at Z.

The pair of transmission gates 42, 44, together with their associated control input S₁ and inverter 58, define a TGM (transmission gate multiplexer) circuit. In a TGM circuit, the two transmission gate outputs are connected together to form the TGM output terminal.

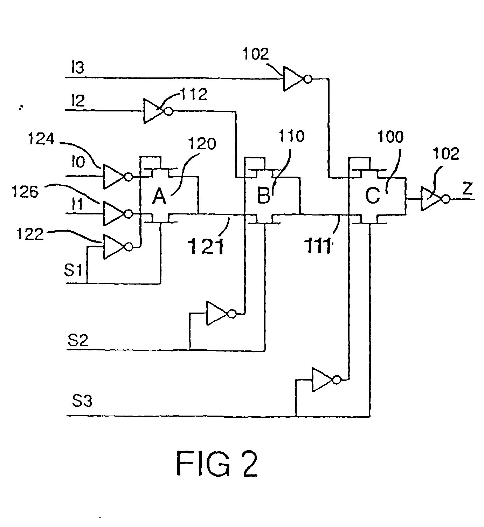

FIG. 2 is a schematic diagram of a 4:1 multiplexer circuit. The circuit includes an input stage TGM circuit 120. The signal inputs to TGM 120 are coupled through inverters 124, 126 to receive input variables I₀ and I₁, respectively. TGM 120 is controlled by a first control signal S₁.

The outlet terminal 121 of TGM 120 is coupled to one signal inlet of a second-stage TGM 110, having a second signal inlet coupled through an inverter 112 to receive a third input variable signal I₂. TGM 110 is controlled by a second control input S₂.

The output line 111 of TGM 110 is connected to one signal inlet of a third (output) stage TGM 100, having a second signal inlet coupled through an inverter 102 to receive a fourth input variable signal I₃. TGM 100 is controlled by a third control signal S₃. In operation, the states of control signals S₁, S₂, S₃ route a selected one of the input variable signals I₀-I₃ through inverter/buffer 102 to the output terminal Z.

FIG. 3 is a schematic diagram of a 5:1 multiplexer circuit that includes three stages of TGM circuits 130, 140, 150 arranged serially in the same manner as the circuit of FIG. 3. Thus, the first-stage TGM 130 receives input variable signals I₀, I₁ and is controlled by a first control signal S₁. Each of stages 140, 150 has one inlet connected to the outlet terminal of the preceding stage TGM, and a second inlet coupled through an inverter 152, 154 to receive a corresponding one of the input variable signals I₂, I₃, respectively. TGM circuits 140, 150 are controlled by second and third control input signals S₂, S₃, respectively.

A fourth (output) TGM stage 160 has one inlet connected to the outlet terminal 151 of TGM 150. TGM 160 includes a second signal inlet coupled through an inverter 162 to receive input variable signal I₄. TGM 160 is controlled by a fourth control signal S₄. In operation, the states of control signals S₁- S₄ control the TGM stages to route one of the input variable signals I₀-I₄ through an inverter/buffer 170 to the output terminal Z.

The serial arrangement of TGM stages shown in FIGS. 2-3 for forming multiplexer circuits can be extended to an arbitrary number of stages, subject to buffering considerations to restore signal gain as necessary. Thus, an N:1 multiplexer circuit can be constructed using N-1 stages of TGM circuits, each stage being controlled by a corresponding one of N-1 control input signals. Each TGM receives the output of the immediately-preceding stage at one signal inlet, and one of the input signals at the other signal inlet.

In general, a series multiplexer circuit according to the invention comprises a series of N-1 stages, where N is the number of input signals (designated I₀...I_{(N-1)}), for selecting one of the input signals as an output signal at an outlet terminal Z. Each stage comprises a TGM circuit controlled by a corresponding control signal (S₁...S_{(N-1)}).

The outlet terminal of each TGM is coupled to one of the signal inlets of the next-stage TGM, except for the final stage, in which the TGM outlet terminal provides the multiplexer circuit final output terminal. The other signal inlet of each TGM stage is coupled to receive one of the input signals.

The multiplexer circuit output optionally may be routed through an inverter or other buffer to provide positive logic and/or to restore signal gain. The necessity of such a buffer depends upon the particular IC process used. Typically, a buffer is required after four TGM stages (see FIG. 5, described below). Such a buffer may be inserted at any point along the TGM serial chain, assuming due regard to logic state if the buffer is an inverted. This allows some flexibility in layout.

Operation of these multiplexer circuits in general is as follows. The first or "input stage" TGM circuit is controlled by the corresponding control signal (S₁) to select one of first and second input variable signals (I₀, I₁) as the first TGM output signal. Each subsequent TGM circuit is controlled by the corresponding control signal to select either the next preceding TGM output signal, or a respective one of the input variable signals (e.g. I₂), as the TGM output signal. The final-stage TGM circuit selects either the immediately-preceding TGM output signal, or the final input signal (I_{N}) as the final output signal.

Because a unique control signal is provided to each of the TGM circuits, loading on each of the control signals is limited to one TGM circuit. While propagation delay will of course increase with additional stages, the delay is actually less than prior art devices. This is because the number of stages required is no more than in the prior art, yet loading is minimized so that propagation delay is minimized.

FIG. 4 is a schematic diagram of a 6:1 multiplexer circuit according to the invention. The circuit is similar to the circuit of FIG. 3, except that the Fig. 4 circuit includes an additional TGM stage, so that the circuit accommodates six input variable signals I₀-I₅ and five control signals S₁-S₅. The same principles of operation apply as described above. Here it may also be observed that an inverter/buffer 200 is shown, by way of example, on the input side of the final stage to restore gain.

The stage multiplexers are preferably provided by TGM circuits that are preferably implemented by means of pass gates, complementary transistor pairs, or a combination thereof. The stage multiplexers may also be implemented using any conventional multiplexer logic circuitry, such as, for example, Boolean logic gates.

## Claims

1. A multiplexer circuit for selecting one of a plurality of input signals (I_{N}), comprising:
three or more transmission gate multiplexer (TGM) circuits (130, 140, 150) coupled in cascade;
each TGM circuit having two inlet terminals for receiving input signals (I₀, I₁); an outlet terminal, and a control terminal coupled to receive a unique control signal (S₁), which control signal is not coupled to another TGM circuit;
the outlet line (121) of the first TGM circuit being coupled to one of the inlet terminals of the second TGM circuit, so as to propagate a selected input signal (I₀ or I₁) through the first TGM circuit to one inlet of the second TGM circuit, and
the other inlet terminal of the second TGM circuit being coupled to receive another input signal (I₂), whereby each TGM circuit selects as its output either the output of the immediately-preceding TGM circuit or another of the input signals.

2. The multiplexer circuit as claimed in claim 1, wherein each TGM circuit comprises a pair of transmission gates (42, 44).

3. A multiplexer circuit as claimed in claim 2, wherein each transmission gate comprises a pass transistor.

4. A multiplexer circuit as claimed in claim 3, wherein each transmission gate comprises a complementary pair of transistors.

5. A multiplexer circuit as claimed in any preceding claim, including a buffer circuit (102) coupled to at least one of the inlet terminals.

6. A multiplexer circuit as claimed in claim 2 or any claim dependent therefrom, in which the control terminal of the circuit is coupled directly to one of the pair of transmission gates (42, 44), and is coupled through an inverter (102) to the other transmission gate, for controlling the pair of transmission gates in a complementary manner.

7. A multiplexer circuit as claimed in any preceding claim, comprising:
a third-stage TGM circuit (150) having two signal inlets, a terminal for a control signal (S₃), and an outlet, with one of the signal inlets being coupled to receive the second-stage output, the other signal inlet being coupled to receive a fourth input signal (I₃), and with the third-stage control terminal being coupled to receive a control signal (S₃), which control signal is not coupled to another TGM circuit, whereby the circuit forms a 4:1 multiplexer.

8. A multiplexer circuit as claimed in claim 7, further comprising:
a fourth-stage TGM circuit (160) having two signal inlets, a terminal for a control signal (S₄), and an outlet, one of the signal inlets being coupled to the third-stage outlet, the other signal inlet being coupled to receive a fifth input signal (I₄), and with the fourth-stage control terminal being coupled to receive a control signal (S₄), which control signal is not coupled to another TGM circuit, whereby the circuit forms a 5:1 multiplexer.

9. A method of selecting one of a plurality (N) of variable input signals (Iₙ) as a final output signal, wherein N is an integer greater than two, comprising the steps of:
providing (N-1) transmission gate multiplexer (TGM) circuits coupled in cascade;
providing (N-1) unique control signals, each being coupled to only one TGM circuit;
in a first one of the TGM circuits, selecting one of two input signals as the first TGM circuit output signal;
in each subsequent TGM circuit, selecting as its output either the immediately-preceding TGM circuit output signal or one of the input signals;
in the final TGM circuit, selecting either the immediately-preceding TGM output signal or the final input signal as the final output signal, and
controlling each of the TGM circuits with a respective control signal, thereby limiting the loading on each of the control signals to the controlled TGM circuit.

## Patentansprüche

1. Multiplexer-Schaltkreis zum Auswählen eines aus einer Vielzahl von Eingangssignalen (I_{N}), welcher umfasst:
drei oder mehr in Kaskade gekoppelte Übertragungsgattermultiplexer(TGM)-Schaltkreise (130, 140, 150);
jeder TGM-Schaltkreis weist zwei Eingangsanschlüsse zum Empfangen von Eingangssignalen (I₀, I₁), einen Ausgangsanschluss und einen gekoppelten Kontrollanschluss zum Empfangen eines einzigen Kontrollsignals (S₁) auf, welches Kontrollsignal nicht mit einem anderen TGM-Schaltkreis gekoppelt ist;
die Ausgangsleitung (121) des ersten TGM-Schaltkreis ist mit einem der Eingangsanschlüsse des zweiten TGM-Schaltkreis gekoppelt, um ein ausgewähltes Eingangssignal (I₀ oder I₁) durch den ersten TGM-Schaltkreis zu einem Eingang des zweiten TGM-Schaltkreis zu übertragen, und
der andere Eingangsanschluss des zweiten TGM-Schaltkreis ist gekoppelt um ein anderes Eingangssignal (I₂) zu empfangen, wobei jeder TGM-Schaltkreis entweder den Ausgang des unmittelbar-vorhergehenden TGM-Schaltkreis oder ein anderes der Eingangssignale als seinen Ausgang auswählt.

2. Multiplexer-Schaltkreis nach Anspruch 1, bei welchem jeder TGM-Schaltkreis ein Paar von Übertragungsgattern (42, 44) umfasst.

3. Multiplexer-Schaltkreis nach Anspruch 2, bei welchem jedes Übertragungsgatter einen Durchgangstransistor umfasst.

4. Multiplexer-Schaltkreis nach Anspruch 3, bei welchem jedes Übertragungsgatter ein komplementäres Paar von Transistoren umfasst.

5. Multiplexer-Schaltkreis nach einem der vorhergehenden Ansprüche, welcher einen mit wenigstens einem der Eingangsanschlüsse gekoppelten Puffer-Schaltkreis (102) enthält.

6. Multiplexer-Schaltkreis nach Anspruch 2 oder einem davon abhängigen Anspruch, bei welchem der Kontrollanschluss des Schaltkreises mit einem des Paars von Übertragungsgattern (42, 44) direkt gekoppelt ist, und über einen Inverter (102) mit dem anderen Übertragungsgatter gekoppelt ist, um das Paar von Übertragungsgattern in einer komplementären Weise zu steuern.

7. Multiplexer-Schaltkreis nach einem der vorhergehenden Ansprüche, welcher umfasst:
einen drittstufigen TGM-Schaltkreis (150) mit zwei Signaleingängen, einem Anschluss für ein Kontrollsignal (S₃), und einem Ausgang, wobei einer der Signaleingänge gekoppelt ist um den zweitstufigen Ausgang zu empfangen, der andere Signaleingang gekoppelt ist um ein viertes Eingangssignal (I₃) zu empfangen, und der drittstufige Steueranschluss gekoppelt ist um ein Kontrollsignal (S₃) zu empfangen, welches Kontrollsignal nicht mit einem anderen TGM-Schaltkreis gekoppelt ist, wobei der Schaltkreis einen 4:1-Multiplexer formt.

8. Multiplexer-Schaltkreis nach Anspruch 7, welcher ferner umfasst:
einen viertstufigen TGM-Schaltkreis (160) mit zwei Signaleingängen, einem Anschluss für ein Kontrollsignal (S₄), und einem Ausgang, wobei einer der Signaleingänge mit dem drittstufigen Ausgang gekoppelt ist, der andere Signaleingang gekoppelt ist um ein fünftes Eingangssignal (I₄) zu empfangen, und der viertstufige Kontrollanschluss gekoppelt ist um ein Kontrollsignal (S₄) zu empfangen, welches Kontrollsignal nicht mit einem anderen TGM-Schaltkreis gekoppelt ist, wobei der Schaltkreis einen 5:1-Multiplexer formt.

9. Verfahren zum Auswählen eines einer Vielzahl (N) von variablen Eingangssignalen (Iₙ) als letztes Ausgangssignal, worin N eine ganze Zahl größer als zwei ist, welches die Schritte umfasst:
Bereitstellen von (N-1) in Kaskade gekoppelten Übertragungsgattermultiplexer(TGM)-Schaltkreisen;
Bereitstellen von (N-1) einzelnen Kontrollsignalen, von denen jedes nur mit einem TGM-Schaltkreis gekoppelt ist;
in einem ersten der TGM-Schaltkreise, Auswählen von einem von zwei Eingangssignalen als erstes TGM-Schaltkreis-Ausgangssignal;
in jedem darauffolgenden TGM-Schaltkreis, Auswählen von entweder dem unmittelbar-vorhergehenden TGM-Schaltkreis-Ausgangssignal oder einem der Eingangssignale als seinen Ausgang;
in dem letzten TGM-Schaltkreis, Auswählen von entweder dem unmittelbar-vorhergehenden TGM-Schaltkreis-Ausgangssignal oder dem letzten Eingangssignal als letztes Ausgangssignal; und
Kontrollieren von jedem der TGM-Schaltkreise mit einem zugehörigen Kontrollsignal, und dadurch Begrenzen der Last auf jedem der Kontrollsignale zu dem kontrollierten TGM-Schaltkreis.

## Revendications

1. Circuit multiplexeur pour sélectionner un signal parmi une pluralité de signaux d'entrée (I_{N}), comportant :
trois ou plus de trois circuits multiplexeurs à portes de transmission (TGM) (130, 140, 150) couplés en cascade,
chaque circuit TGM ayant deux bornes d'entrée pour recevoir des signaux d'entrée (I₀, I₁), une borne de sortie, et une borne de commande couplée pour recevoir un signal de commande unique (S₁), lequel signal de commande n'est pas couplé à un autre circuit TGM,
la ligne de sortie (121) du premier circuit TGM étant couplée à une des bornes d'entrée du deuxième circuit TGM, de manière à propager un signal d'entrée sélectionné (I₀ ou I₁) à travers le premier circuit TGM vers une entrée du deuxième circuit TGM, et
l'autre borne d'entrée du deuxième circuit TGM étant couplée pour recevoir un autre signal d'entrée (I₂), de sorte que chaque circuit TGM sélectionne en tant que sa sortie la sortie du circuit TGM immédiatement précédent ou un autre des signaux d'entrée.

2. Circuit multiplexeur selon la revendication 1, dans lequel chaque circuit TGM comporte une paire de portes de transmission (42, 44).

3. Circuit multiplexeur selon la revendication 2, dans lequel chaque porte de transmission comporte un transistor ballast.

4. Circuit multiplexeur selon la revendication 3, dans lequel chaque porte de transmission comporte une paire complémentaire de transistors.

5. Circuit multiplexeur selon l'une quelconque des revendications précédentes, comportant un circuit tampon (102) couplé à au moins une des bornes d'entrée.

6. Circuit multiplexeur selon la revendication 2 ou l'une quelconque des revendications dépendantes de celle-ci, dans lequel la borne de commande du circuit est couplée directement à une porte de la paire de portes de transmission (42, 44), et est couplée à travers un onduleur (102) à l'autre porte de transmission, pour commander la paire de portes de transmission d'une manière complémentaire.

7. Circuit multiplexeur selon l'une quelconque des revendications précédentes, comportant :
un circuit TGM de troisième étage (150) ayant deux entrées de signaux, une borne pour un signal de commande (S₃), et une sortie, une des entrées de signaux étant couplée pour recevoir la sortie de deuxième étage, l'autre entrée de signaux étant couplée pour recevoir un quatrième signal d'entrée (I₃), et la borne de commande de troisième étage étant couplée pour recevoir un signal de commande (S₃), lequel signal de commande n'est pas couplé à un autre circuit TGM, de sorte que le circuit forme un multiplexeur 4:1.

8. Circuit multiplexeur selon la revendication 7, comportant de plus :
un circuit TGM de quatrième étage (160) ayant deux entrées de signaux, une borne pour un signal de commande (S₄), et une sortie, une des entrées de signaux étant couplée à la sortie de troisième étage, l'autre entrée de signaux étant couplée pour recevoir un cinquième signal d'entrée (I₄), et la borne de commande de quatrième étage étant couplée pour recevoir un signal de commande (S₄), lequel signal de commande n'est pas couplé à un autre circuit TGM, de sorte que le circuit forme un multiplexeur 5:1.

9. Procédé pour sélectionner un signal parmi une pluralité (N) de signaux d'entrée variables (Iₙ), en tant que signal de sortie final, dans lequel N est un nombre entier supérieur à deux, comportant les étapes consistant à :
fournir (N-1) circuits multiplexeurs à portes de transmission (TGM) couplés en cascade,
fournir (N-1) signaux de commande uniques, chacun étant couplé à un seul circuit TGM,
dans un premier des circuits TGM, sélectionner un des deux signaux d'entrée en tant que le signal de sortie du premier circuit TGM,
dans chaque circuit TGM ultérieur, sélectionner en tant que sa sortie le signal de sortie du circuit TGM immédiatement précédent ou un des signaux d'entrée,
dans le circuit TGM final, sélectionner le signal de sortie du circuit TGM immédiatement précédent ou le signal d'entrée final en tant que le signal de sortie final, et
commander chacun des circuits TGM à l'aide d'un circuit de commande respectif, de manière à limiter la charge sur chacun des signaux de commande dans le circuit TGM commandé.
